# EUROPEAN PATENT SPECIFICATION

(11) **EP 1 578 189 B1**
(45) Date of publication and mention of the grant of the patent: **26.08.2009**
(21) Application number: 03782606.2
(22) Date of filing: 08.12.2003
(51) Int. Cl.: A01K 27/00

(54) **ANIMAL TRAVEL HARNESS**
SICHERHEITSGESCHIRR FÜR TIERE
HARNAIS DE VOYAGE ET SYSTEME DE RETENUE POUR ANIMAUX

(30) Priority: 06.12.2002 GB 0228494
(43) Date of publication of application: 28.09.2005
(73) Proprietor: Smith, Joanne Joy, Duke Street Chelmsford Essex CM1 1HL (GB)
(72) Inventor: Smith, Joanne Joy, Duke Street Chelmsford Essex CM1 1HL (GB)
(86) International application number: PCT/GB2003/005344
(87) International publication number: WO 2004/052089

(56) References cited:
- GB-A- 2 302 261
- US-A- 3 310 034
- US-A- 4 970 991
- US-A- 5 154 660
- US-A- 5 167 203

## Description

This invention relates to an animal restraint system incorporating an animal travel harness. In particular, it relates to an animal restraint system suitable for use in securing a dog to a seat of a motor vehicle.

The present invention has been developed for use with pet dogs, and will therefore be described herein with particular emphasis on this use. It is believed however, that the present invention will be equally effective for use with a wide range of different animals. Similarly, whilst the present invention has been developed particularly for use in securing a dog to a seat of a motor vehicle, it is envisaged that the invention may be adapted for securing or restraining animals in other situations, and may therefore find use in such areas as veterinary care, pet grooming salons etc.

It has for some time been appreciated that the transport of pet dogs in motor vehicles presents a number of potential hazards. The motion of an unrestrained dog within a vehicle can cause significant injuries both to itself, and to human occupants of the vehicle. This is of particular concern during harsh braking, cornering etc. when the dog may be flung about the inside of the car with some force.

To address the above issues, a variety of travel harnesses for dogs have been proposed over the years, often operating on the principle of providing means to adapt a standard car seat belt for the purpose of restraining a dog, e.g. by threading the seat belt through a part of the harness. However, such conventional dog travel harnesses have been found to be unsatisfactory for at least two reasons:
Firstly, the degree of restraint afforded to the dog by such systems is typically less than that afforded to a human occupant of a motor vehicle. That is to say, the dog is still flung around to some extent by the motion of the car. The danger posed to the dog and its human companions in the vehicle, is therefore only slightly reduced.

And secondly, many existing harnesses are designed to be secured to a seat of a motor vehicle at a single fixing point, usually located at or adjacent the dog's neck or spine. On harsh braking, this can cause whiplash or other non-impact injuries to the dog's neck or spine.

The present invention seeks to address the above-identified issues by providing an animal restraint system, which enables a dog to be safely and securely restrained on a seat of a motor vehicle, whilst significantly reducing the risk of both impact and non-impact injuries to the dog.

According to the present invention, there is provided an animal restraint system comprising:
- an animal travel harness having: a neck strap adapted to fit around the neck of an animal to be restrained; a body strap adapted to fit around the body of said animal; a chest strap interconnecting the neck strap and the body strap and adapted to embrace the chest of said animal; a spine strap interconnecting the neck strap and the body strap and adapted to extend along a portion of the spine of said animal; two fixing points provided on the body strap, one arranged at either side thereof between the chest strap and the spine strap; and a further fixing point provided on the spine strap and adapted to engage with a standard animal exercise lead;
- a generally circular belt, adapted to be secured to an upright portion of a motor vehicle seat by extending horizontally therearound, and comprising at least two forwardly-directed fixing points;
- a pair of linkages, each adapted to engage at one end thereof with a fixing point on the body strap of the harness, and at the other end thereof with a fixing point on the belt;
and wherein each said fixing point comprises a metal ring, and each linkage is provided at either end thereof with a standard dog lead clip to enable connection of said end to its respective fixing point.

The neck strap and body strap are designed to extend circumferentially around a dog, either side of the dog's shoulders.

The neck strap and the body strap may each be formed as a generally circular, continuous loop. However, to enable the travel harness to be quickly and easily fitted to and removed from the dog, it is generally preferred that the neck strap has two free ends, each said end having complementary engagement means to enable the strap to be fastened around the dog's neck.

Similarly, the body strap may also be formed with two free ends, each said end having complementary engagement means to enable the body strap to be fastened around the dog's body. However, it is preferred that the body strap should instead comprise an upper half strap and a lower half strap, each said half strap having two free ends, each provided with complementary engagement means to enable engagement with the other half strap.

The upper half strap is thus attached to the spine strap only, and extends downwardly from the dogs shoulders, substantially half-way down each side of the dog's body. The lower half strap is attached to the chest strap only, and extends upwardly from the dog's underbelly at each side of the dog's body to meet and engage with the upper half strap. Each said half strap has two free ends, each provided with complementary engagement means to enable engagement with the other half strap.

The fixing points are preferably located at or adjacent the complementary engagement means on the body strap. Most preferably, the complementary engagement means comprise a quick release clasp mechanism, such as inter-locking plastics buckles.

In order to accommodate dogs of differing sizes, the neck strap and/or the body strap are preferably adjustable. Most preferably, each strap of the harness is adjustable.

To provide additional support to the dog, the chest strap may desirably be expanded in a lateral direction, so as to spread any applied force over the dog's chest, and padded to enhance the dog's comfort.

Optionally, a third linkage may be provided, adapted to engage at one end thereof with the further fixing point on the spine strap of the harness, and at the other end thereof with a third fixing point on the belt.

To enable the restraint system to be used with varying sizes of dog, each linkage is preferably adjustable. The circular belt may desirably also be adjustable, so as to enable its use on either a front or rear seat of a motor vehicle, as well as to permits its use in varying types and sizes of vehicles.

As an accessory to the invention, a coat for the animal to be restrained may additionally be provided, said coat having apertures adapted to receive one or more straps of the harness.

In order that the present invention may be fully understood, a preferred embodiment thereof will now be described in detail, though only by way of example, with reference to the accompanying drawings, in which:
Figure 1 shows an animal travel harness forming a first part of an animal restraint system according to the present invention, when laid out flat;
Figure 2 shows a side view of a dog wearing the harness of Figure 1 during on-lead exercise;
Figure 3 shows a perspective view of the underside of the dog wearing the harness of Figure 1;
Figure 4 shows a second part of the animal restraint system according to the present invention;
Figure 5 shows a side view of a dog, in a standing position, wearing the harness of Figure 1 as part of the animal restraint system of the present invention;
Figure 6 shows a side view of the dog of Figure 5, in a seated position;
Figure 7 shows a coat for an animal, forming an optional component of the animal restraint system of the present invention, when laid out flat; and
Figure 8 shows a side view of a dog wearing the coat of Figure 7 in combination with the harness of Figure 1.

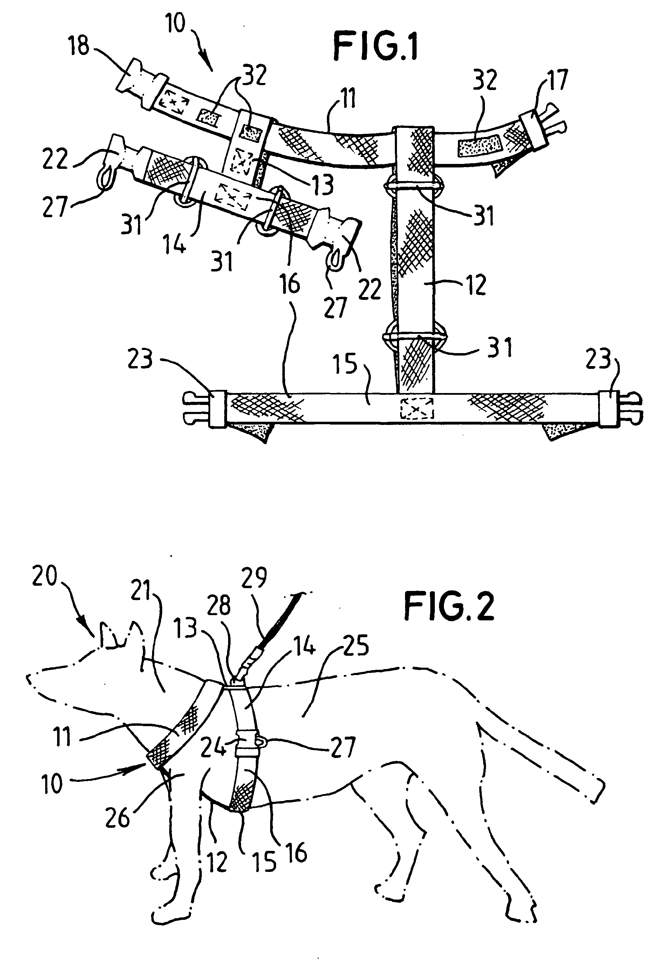

Referring first to Figures 1 to 3, there is shown an animal travel harness, generally indicated 10 forming a first part of an animal restraint system according to the present invention. The harness 10, which is shown in Figure 1 opened up and laid flat , comprises a neck strap 11, a chest strap 12, a spine strap 13, and upper and lower half straps 14, 15 which together form a body strap 16.

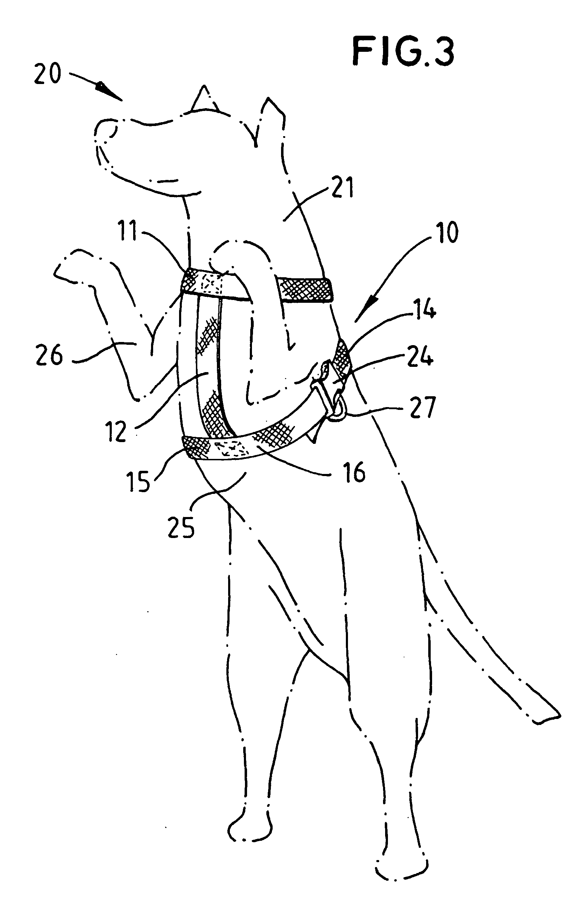

The neck strap 11 is provided at one end thereof with a male connector 17, and at its other end with a complementary female connector 18. The male 17 and female connectors 18 together form a quick release clasp mechanism which in use enables the neck strap 11 to be secured around the neck 21 of a dog, generally indicated 20, as is best shown in Figures 2 and 3.

The upper half strap 14 is provided at either end thereof with similar female connectors 22, whilst the lower half strap 15 is provided at either end thereof with similar male connectors 23. Each male connector 22 combines with its respective female connector 23, to form a similar quick release clasp mechanism 24. The upper and lower half straps 14, 15 may be combined using the clasp mechanism 24, around the body 25 of the dog 20, behind its front legs 26 to form the body strap 16.

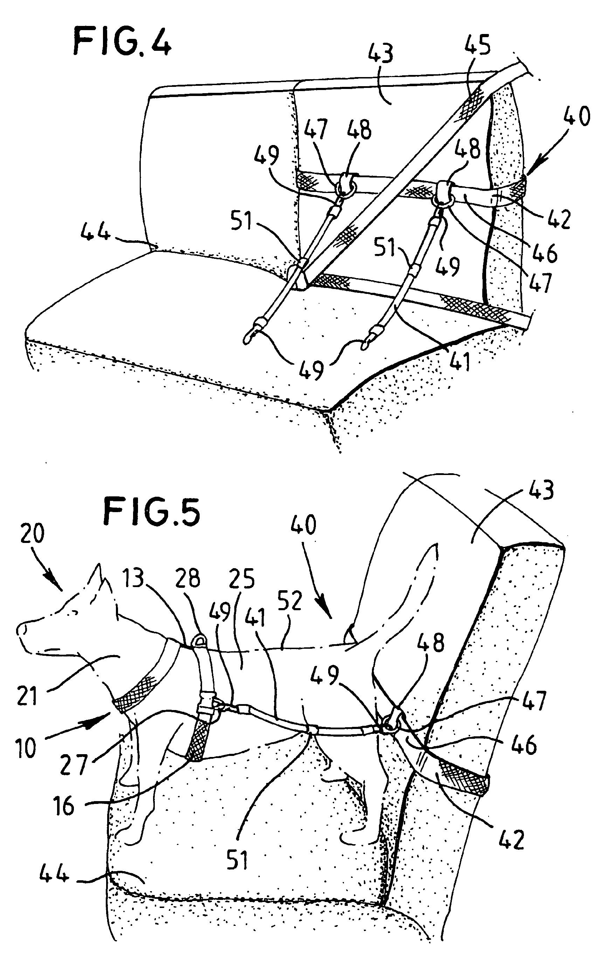

The upper half strap 14 is additional provided with a pair of metal rings 27, located on the female connectors 22. These rings 27 act as fixing points to enable the harness 10 to be used as part of the animal restraint system of the present invention, as will be discussed in more detail below, with reference to Figures 4 to 6. As is best shown in Figure 2, the spine strap 13 is provided with a further ring 28, which acts as a fixing point for a standard dog lead 29.

Referring again to Figure 1, each of the chest strap 12, and the upper half strap 14 are provided with buckles 31 to enable adjustment of their length. The size of the harness 10 may thus be varied so as to accommodate different sizes of dog 20. Each of the neck strap 11, spine strap 13, and lower half strap 15 may additionally also be provided with buckles 31.

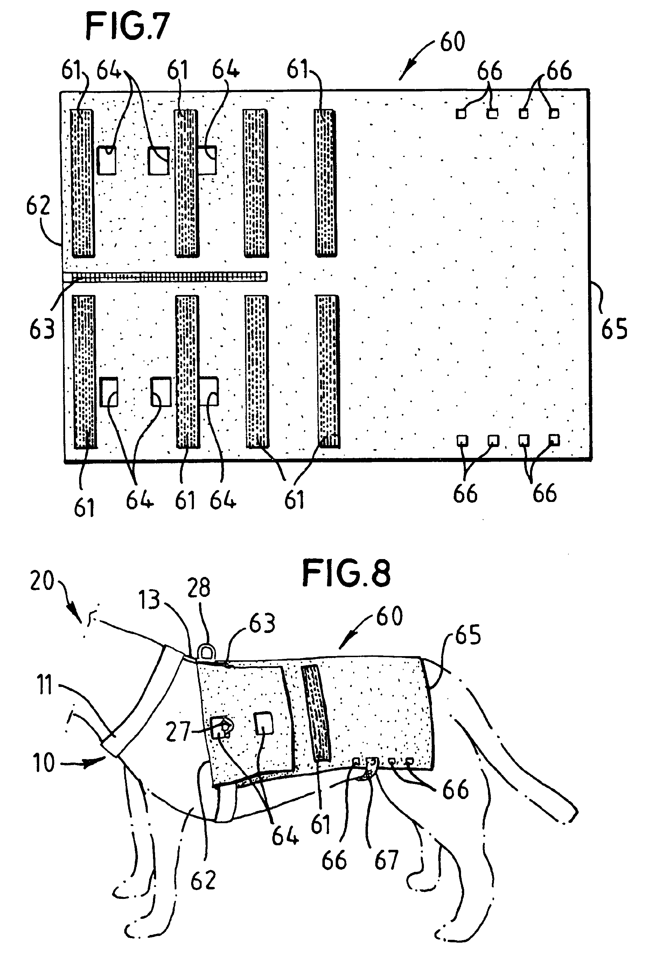

Portions 32 of the neck strap 11 are also provided with fabric comprising a hook-and-loop closure system such as Velcro^{®}, to enable the harness 10 to be attached to a dog coat, as will be discussed in more detail below with reference to Figures 7 and 8. Each of the chest strap 12, spine strap 13, and upper and lower half straps 14,15 may additionally also be provided with such portions 32.

Referring now to Figures 4 to 6, there is shown an animal restraint system, generally indicated 40 (note: only part of the system is shown in Figure 4). The system 40 comprises the animal travel harness 10, as described above with reference to Figures 1 to 3, a pair of side linkages 41, and a circular belt 42.

As is best shown in Figure 4, the circular belt 42 is adapted to extend circumferentially around an upright portion 43 of a motor vehicle seat 44. The belt 42 is provided with, adjustment means (not shown) to enable it to be used on either the front or rear seat 44 of a motor vehicle, and with seats 44 of differing sizes in different types of vehicles. The belt 42 may optionally be further secured by fastening the motor vehicle's standard seat belt 45 over the top thereof.

The forwardly-directed face 46 of the belt 42 is provided with two metal rings 47 which act as fixing points for the side linkages 41. Each ring 47 is carried on a free-running nylon collar 48 mounted on the belt 42. Each linkage 41 is provided at either end thereof with a dog clip 49, by means of which one end of each linkage 41 attaches to the belt 42 via the rings 47, and the other end of each linkage 41 attaches to the harness 10 on the dog 20 via the rings 27 on the body strap 16. The linkages 41 are also provided with adjustment buckles 51 to enable the system 40 to be used with differing sizes of dog 20.

Although not shown in Figures 4 to 6, the restraint system 40 may additionally comprise a third linkage 41 having a dog clip 49 at one end thereof for attachment to the further ring 28 on the spine strip 13, and a like dog clip 49 at the other end thereof for attachment to a third fixing ring 47 carried on a third free-running collar 48 on the circular belt 42.

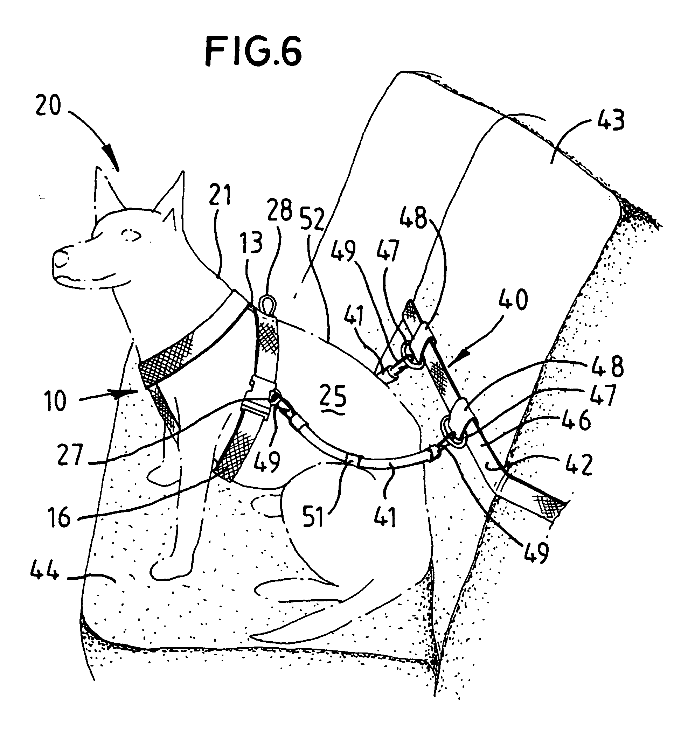

The dog 20 is thus secured to the seat 44, and may comfortably travel in either a standing position, as shown in Figure 5, or a seated position, as shown in Figure 6. However, any movement beyond the confines of the seat 44 is restricted, thus protecting the dog 20 and its human companions in the vehicle from impact injuries. The securing of the dog 20 in two positions 27 at the sides of its body 25 also serves to protect the dog 20 from non-impact injuries to its neck 21 and spine 52.

Referring now to Figures 7 and 8, there is shown a coat, generally indicated 60, for a dog 20, which coat 60 is an optional accessory to the animal restraint system of the present invention, as described above with reference to Figures 1 to 6.

The coat 60 is provided with fabric strips 61 having a Velcro^{®}-type hook-and-loop system, complementary to one another, and to the portions 32 on the harness 10. A plurality of strips 61 are provided to enable the neck end 62 of the coat 60 to be folded over, thereby permitting its use with differing sizes of dog 20. As shown in Figure 8, the neck end 62 of the coat 60 may be adapted to fold over the body strap 16 of the harness 10. Alternatively, it may be folded over the neck strap 11 of the harness 10, again depending on the size of dog 20.

A zip 63 is provided adjacent the neck end 62 so as to enable the above-described folding, and also to permit access to the ring 28 on the spine strap 13. Apertures 64 are also provided in the coat 60 to permit access to the rings 27 on the body strap 16.

At the tail end 65 of the coat 60 are provided a plurality of studs 66. As shown in Figure 8, an elasticated strap 67 is adapted to engage with the studs 66 at either end, and to embrace the dog's underbelly 68, therebetween.

## Claims

1. An animal restraint system comprising:
- an animal travel harness having: a neck strap adapted to fit around the neck of an animal to be restrained; a body strap adapted to fit around the body of said animal; a chest strap interconnecting the neck strap and the body strap and adapted to embrace the chest of said animal; a spine strap interconnnecting the neck strap and the body strap and adapted to extend along a portion of the spine of said animal; two fixing points provided on the body strap, one arranged at either side thereof between the chest strap and the spine strap; and a further fixing point provided on the spine strap and adapted to engage with a standard animal exercise lead;
- a generally circular belt, adapted to be secured to an upright portion of a motor vehicle seat by extending horizontally therearound, and comprising at least two forwardly-directed fixing points;
- a pair of linkages, each adapted to engage at one end thereof with a fixing point on the body strap of the harness, and at the other end thereof with a fixing point on the belt;
and wherein each said fixing point comprises a metal ring, and each linkage is provided at either end thereof with a standard dog lead clip to enable connection of said end to its respective fixing point.

2. An animal restraint system as claimed in claim 1, wherein the neck strap and/or the body strap are formed as a generally circular, continuous loop.

3. An animal restraint system as claimed in claim 1, wherein each of the neck strap and/or the body strap has two free ends, each said end having complementary engagement means to enable said strap to be fastened around the neck of said animal.

4. An animal restraint system as claimed in claim 3, wherein the body strap comprises an upper half strap and a lower half strap, each said half strap having two free ends, each provided with complementary engagement means to enable engagement with the other half strap.

5. An animal restraint system as claimed in claim 4, wherein the upper half strap is attached to the spine strap only, and the lower half strap is attached to the chest strap only.

6. An animal restraint system as claimed in any of claims 3 to 5, wherein the fixing points on the body strap each comprise a metal ring and are located at or adjacent the complementary engagement means on the body strap, and wherein the or each complementary engagement means comprise a quick release clasp mechanism.

7. An animal restraint system as claimed in any of the preceding claims, wherein at least the neck strap and/or the body strap, and preferably each strap, is adjustable to accommodate animals of differing sizes.

8. An animal restraint system as claimed in any of the preceding claims, further comprising a third linkage, adapted to engage at one end thereof with the further fixing point on the spine strap of the harness, and at the other end thereof with a third fixing point on the belt.

9. An animal restraint system as claimed in any of the preceding claims, further comprising a coat for said animal, said coat having apertures adapted to receive one or more straps of said harness.

## Patentansprüche

1. Tierrückhaltesystem, das folgendes umfasst:
ein Tier-Reisegeschirr mit: einem Nackenriemen, der um den Hals des zurückzuhaltenden Tieres angepasst werden kann; einem Körperriemen, der um den Körper des Tieres angepasst werden kann; einen Brustriemen, der den Nackenriemen und den Körperriemen miteinander verbindet und die Brust des Tieres umfassen kann; einem Rückenriemen, der den Nackenriemen mit dem Körperriemen verbindet und sich entlang eines Abschnitts des Rückens des Tieres erstrecken kann; zwei Befestigungspunkten, die an dem Körperriemen vorgesehen sind, wobei auf jeweils einer Seite zwischen dem Brustriemen und dem Rückenriemen ein Punkt angeordnet ist; und wobei ein weiterer Befestigungspunkt an dem Rückenriemen vorgesehen ist und mit einer standardmäßigen Tierübungsleine eingreifen kann;
einen allgemein runden Gurt, der an einem aufrechten Teilstück eines Motorfahrzeugsitzes gesichert werden kann, indem er dort herum horizontal erstreckt wird, und mit mindestens zwei nach vorne ausgerichteten Befestigungspunkten;
ein Paar von Verbindungseinrichtungen, die jeweils in der Lage sind, an einem ihrer Enden mit einem Befestigungspunkt an dem Körperriemen des Geschirrs einzugreifen und an dem anderen Ende mit einem Befestigungspunkt an dem Gurt;
und wobei jeder genannte Befestigungspunkt einen Metallring umfasst, und wobei jede Verbindungseinrichtung an jedem Ende mit einer standardmäßigen Hundeleinenklammer versehen ist, um die Verbindung des genannten Endes mit dessen entsprechenden Befestigungspunkt zu ermöglichen.

2. Tierrückhaltesystem nach Anspruch 1, wobei der Nackenriemen und/oder der Körperriemen als eine allgemein runde Bandschleife ausgebildet sind.

3. Tierrückhaltesystem nach Anspruch 1, wobei der Nackenriemen und/oder der Körperriemen jeweils zwei freie Enden aufweisen, wobei jedes genannte Ende komplementäre Eingriffseinrichtungen aufweist, die die Befestigung des genannten Riemens um den Nacken des genannten Tieres ermöglichen.

4. Tierrückhaltesystem nach Anspruch 3, wobei der Körperriemen einen oberen Halbriemen und einen unteren Halbriemen umfasst, wobei jeder genannte Halbriemen zwei freie Enden aufweist, die jeweils mit komplementären Eingriffseinrichtungen versehen sind, um einen Eingriff mit dem anderen Halbriemen zu ermöglichen.

5. Tierrückhaltesystem nach Anspruch 4, wobei der obere Halbriemen nur an dem Rückenriemen angebracht ist, und wobei der untere Halbriemen nur an dem Brustriemen angebracht ist.

6. Tierrückhaltesystem nach einem der Anspruche 3 bis 5, wobei die Befestigungspunkte an dem Körperriemen jeweils einen Metallring umfassen und an oder angrenzend an die komplementären Eingriffseinrichtungen des Körperriemens angeordnet sind, und wobei die oder jede der komplementären Eingriffseinrichtungen einen Schnelllöse-Schnappmechanismus umfasst.

7. Tierrückhaltesystem nach einem der vorstehenden Ansprüche, wobei zumindest der Nackenriemen und/oder der Körperriemen und vorzugsweise jeder der Riemen anpassbar ist, um für Tiere unterschiedlicher Größen geeignet zu sein.

8. Tierrückhaltesystem nach einem der vorstehenden Ansprüche, wobei dieses ferner eine dritte Verbindungseinrichtung umfasst, die an einem ihrer Enden mit einem weiteren Befestigungspunkt an dem Rückenriemen des Geschirrs eingreifen kann und an ihrem anderen Ende mit einem dritten Befestigungspunkt an dem Gurt.

9. Tierrückbaltesystem nach einem der vorstehenden Ansprüche, wobei dieses ferner einen Mantel für das genannte Tier umfasst, wobei der Mantel Öffnungen aufweist, die einen oder mehrere Riemen des genannten Geschirrs aufnehmen können.

## Revendications

1. Système de retenue pour animal comprenant :
un harnais de voyage pour animal ayant : une sangle de cou adaptée pour être placée autour du cou d'un animal à retenir ; une sangle de corps adaptée pour être placée autour du corps dudit animal ; une sangle de poitrine interconnectant la sangle de cou et la sangle de corps et adaptée pour embrasser la poitrine dudit animal ; une sangle de colonne vertébrale interconnectant la sangle de cou et la sangle de corps et adaptée pour s'étendre le long d'une partie de la colonne vertébrale dudit animal ; deux points de fixation prévus sur la sangle de corps, un étant agencé sur l'un de ses côtés entre la sangle de poitrine et la sangle de colonne vertébrale ; et un autre point de fixation prévu sur la sangle de colonne vertébrale et adapté pour venir en prise avec une laisse d'exercice pour animal standard :
une courroie généralement circulaire, adaptée pour être fixée à une partie verticale d'un siège de véhicule à moteur en s'étendant horizontalement autour de celui-ci et comprenant au moins deux points de fixation dirigés vers savant ;
une paire de tringles, chacune étant adaptée pour venir en prise à l'une de ses extrémités avec un point de fixation sur la sangle de corps du harnais et à l'autre de ses extrémités avec un point de fixation sur la courroie ;
et dans lequel chacun desdits points de fixation comprend un anneau métallique, et chaque tringle dispose à l'une de ses extrémités d'une attache pour laisse à chien standard afin de permettre la connexion de ladite extrémité à son point de fixation respectif.

2. Système de retenue pour animal selon la revendication 1, dans lequel la sangle de cou et/ou la sangle de corps sont formées comme une boucle continue généralement circulaire.

3. Système de retenue pour animal selon la revendication 1, dans lequel chacune de la sangle de cou et/ou de la sangle de corps a deux extrémités libres, chacune desdites extrémités ayant des moyens de mise en prise complémentaires pour permettre à ladite sangle d'être fixée autour du cou dudit animal.

4. Système de retenue pour animal selon la revendication 3, dans lequel la sangle de corps comprend une demi-sangle supérieure et une demi-sangle inférieure, chacune desdites demi-sangles ayant deux extrémités libres, chacune disposant de moyens de mise en prise complémentaires pour permettre la mise en prise avec l'autre demi-sangle.

5. Système de retenue pour animal selon la revendication 4, dans lequel la demi-sangle supérieure est attachée à la sangle de colonne vertébrale uniquement, et la demi-sangle inférieure est attachée à la sangle de poitrine uniquement.

6. Système de retenue pour animal selon l'une quelconque des revendications 3 à 5, dans lequel les points de fixation sur la sangle de corps comprennent chacun un anneau métallique et sont situés au niveau de ou à côté des moyens de mise en prise complémentaires sur la sangle de corps, et dans lequel le ou chaque moyen de mise en prise complémentaire comprend un mécanisme de saisie à libération rapide.

7. Système de retenue pour animal selon l'une quelconque des revendications précédentes, dans lequel au moins la sangle de cou et/ou la sangle de corps, et de préférence chaque sangle, est ajustable pour s'adapter à des animaux de différente taille.

8. Système de retenue pour animal selon l'une quelconque des revendications précédentes comprenant en outre une troisième tringle, adaptée pour venir en prise au niveau de l'une de ses extrémités avec l'autre point de fixation sur la sangle de colonne vertébrale du harnais, et au niveau de son autre extrémité avec un troisième point de fixation sur la courroie.

9. Système de retenue pour animal selon l'une quelconque des revendications précédentes, comprenant en outre un manteau pour ledit animal, ledit manteau ayant des ouvertures adaptées pour recevoir une ou plusieurs sangles dudit harnais.
